# NEW EUROPEAN PATENT SPECIFICATION

(11) **EP 0 943 088 B2**
(45) Date of publication and mention of the opposition decision: **29.10.2008**
(45) Mention of the grant of the patent: 06.08.2003
(21) Application number: 97949706.2
(22) Date of filing: 02.12.1997
(51) Int. Cl.: G01N 21/88

(54) **WAFER INSPECTION SYSTEM FOR DISTINGUISHING PITS AND PARTICLES**
WAFER INSPEKTIONSSYSTEM FÜR DIE UNTERSCHEIDUNG VON LÖCHERN UND STAUBPARTIKELN
SYSTEME DE CONTROLE DE TRANCHES DISTINGUANT LES PUITS ET LES PARTICULES

(30) Priority: 04.12.1996 US 32103 P
(43) Date of publication of application: 22.09.1999
(73) Proprietor: KLA-Tencor Corporation, San Jose, CA 95134-1809 (US)
(72) Inventor: FOSSEY, Michael, E., Charlotte, NC 28277 (US); STOVER, John, C., Charlotte, NC 28277 (US)
(74) Representative: Priori, Enrico
(86) International application number: PCT/US1997/021947
(87) International publication number: WO 1998/025131

(56) References cited:
- EP-A- 0 398 781
- WO-A-96/27786
- US-A- 4 933 567
- US-A- 5 424 536
- US-A- 5 461 474

## Description

### Field and Background of the Invention

The present invention relates to surface inspection systems and methods and, more particularly, to the inspection of articles or workpieces, such as silicon wafers, to detect the presence of defects such as particles or crystal-originated pits on the surface and to distinguish therebetween.

Surface inspection systems are commonly used for the inspection of articles or workpieces such as silicon wafers to detect the presence of defects on the wafer surface. For example, a surface inspection is disclosed in WO 96/27786 which comprises an inspection station for receiving a workpiece and a scanner positioned and arranged to scan a surface of the workpiece at said inspection station. The scanner includes a light source arranged to project a beam of P-polarized light and to scan the P-polarized light beam across the surface of the workpiece. A plurality of collectors are arranged for collecting components of light scattered at different angles from the surface of the workpiece by defects present at the workpiece surface, and a detector is associated with each said collector for detecting the collected light and producing a signal.

When the inspection indicates a large number of defects, the wafer may be sent back for recleaning. If the defects are particles or other debris on the wafer surface, the recleaning is successful. However, if the defects are pits or "COPS" (crystal originated pits) in the wafer surface, they are not removed by recleaning. Because such surface inspection systems fail to distinguish between pit defects and particle defects, the wafer is typically sent back for recleaning regardless of whether the defects are pits or particles. Because these defects may be pits, recleaning the wafer may result in nothing more than a waste of time and resources. It would be advantageous to be able to distinguish pits in the surface of the wafer from particles located thereon.

### Summary of the Invention

The present invention provides a surface inspection system and method which not only detects defects such as particles or pits on the surface of a workpiece, such as a silicon wafer, but also distinguishes between crystal-originated pit defects and particle defects. This makes it possible to easily ascertain whether the workpiece requires recleaning to remove particle defects, or whether other measures must be taken.

In a broad aspect, the surface inspection system comprises :
- an inspection station for receiving a workpiece and more particularly a silicon wafer;
- a scanner positioned and arranged to scan a surface of the workpiece at said inspection station, said scanner including a light source arranged to project a beam of P-polarized light at an angle of incidence other than normal to the surface of the workpiece and means positioned to scan the P-polarized light beam across the surface of the workpiece;
- a plurality of collectors arranged for collecting components of light scattered at different angles from the surface of the workpiece by defects present at the workpiece surface ; and
- a photodetector associated with each said collector for detecting the collected light and producing a signal.

The inspection system includes means responsive to the signals produced by said photodetectors for determining differences in the light components scattered from the workpiece and collected by different ones of said collectors and for classifying a surface defect as a particle or a crystal-originated pit based upon said differences.

The differences in the angular distribution of the scattered light may, for example, be detected by comparing the amount of light scattered in a direction perpendicular from the surface of the workpiece to the amount of light backscattered from the surface of the workpiece. The detection of differences in the angular distribution of the scattered light may also, for example, involve identifying a dip in the intensity distribution of the scattered light.

The scanner preferably scans across the surface of the workpiece along a relatively narrow scan path during rotational and translational travel of the workpiece. More specifically, the system preferably has a transporter arranged for transporting the workpiece along a material path and a rotator associated with the transporter and arranged for rotating the workpiece during translational travel along the material path. The scanner is positioned and arranged for scanning a surface of a workpiece during rotational and translational travel along the material path so that the entire surface of the workpiece is raster scanned in a spiral pattern. The scanner includes either a P-polarized light source or a light source coupled with a P-polarized filter positionally aligned with the light source.

A collector also is arranged for collecting light reflected and scattered from the surface of the workpiece during rotational and translational travel along the material path. The collector includes a dark channel detector positioned for detecting light which is scattered from the surface of a workpiece. The dark channel detector includes a plurality of collectors positioned and arranged for collecting light at different angles relative to the surface of the workpiece. Each collector includes a photodetector for generating electrical signals in response to the collected light. The electrical signals from photodetectors located at the different angles are compared to determine the differences in angular distribution of the scattered light.

The plurality of collectors preferably includes a forward channel collector arranged to collect light components scattered forwardly from the surface of the workpiece at a relatively small angle with respect to the specular reflection from the workpiece, a center channel collector positioned adjacent to the forward channel collector and arranged to collect light components scattered substantially normal from the surface of the workpiece at a relatively medium angle, and a back channel collector positioned adjacent to the center channel collector and arranged to collect light components scattered backwardly from the surface of the workpiece at a relatively large angle.

When the scanned light beam contacts a defect, such as a pit or a particle, light is scattered from the surface and is collected by the collectors. The intensity of the scattered light, and the time of its detection during the scan, provide information about the size and location of the defect on the surface of the workpiece. Furthermore, the nature of the defect, i.e. whether it is a pit or a particle, can be ascertained by detecting differences in the angular distribution of the light scattered from the workpiece. For example, if the defect is a pit, the amount of light scattered and detected by the center channel collector is typically greater than that detected by the back channel collector. Alternatively, if the defect is a particle, the amount of the light detected by the center channel collector is typically less than that detected by the back channel collector and/or the forward channel collector. The dark channel collector system provides the surface inspection system of the present invention with high sensitivity to more readily identify, classify, and/or provide a topography of the condition of the surface of an article or a workpiece, including defects such as particles, pits and the like, in and on the surface of a workpiece.

According to one specific embodiment of the invention, a P-polarized light beam is directed along a predetermined relatively narrow scan path and at a relatively low angle of incidence with respect to the surface of the workpiece. The method preferably also includes imparting a rotational and translational movement of the workpiece during the narrow scan so that the narrow scan path traverses the entire surface of the workpiece along a spiral path.

The surface inspection system and method of the present invention advantageously distinguish crystal-originated pits in the surface of the wafer from particles on the surface of the wafer and therefore determine whether cleaning or some other course of action, e.g., altering the conditions of manufacture and storage, can be used to cure the defects. In addition, the surface inspection system and method provide high spatial resolution, a small field of view at the object plane which, in turn, provides improved edge detection performance, improved repeatability in the inspection process and reduces interference signals caused by scatter from air molecules.

### Brief Description Of The Drawings

Other advantages will appear as the description proceeds when taken in connection with the accompanying drawings, in which:
Figure 1 is a perspective view of a surface inspection system according to the present invention.
Figure 2 illustrates a transporter of a surface inspection system according to the present invention arranged for rotatively and translationally transporting a workpiece, such as a wafer, along a material path.
Figure 3 schematically illustrates a side elevational view of a surface inspection system according to the present invention.
Figure 3A is a fragmentary view of a light channel detector of a surface inspection system according to the present invention.
Figure 4 schematically illustrates a side elevational view of an optical scanning system of a surface inspection system according to the present invention.
Figure 5 schematically illustrates rotational and translational travel of a wafer through an inspection area according to the present invention.
Figure 6 schematically illustrates a collector of a surface inspection system having segmented optics for collecting light scattered from a surface of a wafer according to the present invention.
Figure 7 schematically illustrates a system controller of a surface inspection system according to the present invention.
Figure 8 illustrates a comparison between using S-polarized and P-polarized light at normal and non-normal angles of incidence to distinguish pits and particles in and on the surface of a wafer.
Figure 9 illustrates the use of P-polarized light at a non-normal angle of incidence in detecting pits and several types of particles in and on the surface of a wafer.
Figure 10 illustrates a comparison between using P-polarized and S-polarized light in detecting a particle on the surface of a wafer and provides both experimental and modeled results.
Figure 11 illustrates the use of P-polarized light at a non-normal angle of incidence in detecting scattered light for pits of various diameters in the surface of a wafer.
Figure 12 illustrates the use of P-polarized light in detecting pits of various diameters in a wafer.
Figure 13 illustrates the angular distribution pattern of relative small COPS and particles using P-polarized light at a non-normal angle of incidence.
Figure 14 is an illustration similar to Figure 13 showing the angular distribution pattern of medium size COPS and particles.
Figure 15 is an illustration similar to Figure 13 showing the angular distribution pattern of larger size COPS and particles.
Figure 16 is a flowchart illustrating the application of an algorithm for distinguishing between COPS and particles.
Figures 17 and 18 are graphs illustrating how the constants for the algorithm of Figure 16 may be derived.
Figure 19 is a particle map of a clean wafer.
Figure 20 is a COP map of a clean wafer.
Figure 21 is a particle map of the wafer of Figure 19 after particle defects of known size have been deposited thereon.
Figure 22 is a COP map of the wafer of Figure 21 with the particle deposition present, but not detected as COP defects.

### Description of Illustrated Embodiment

The present invention will be described more fully hereinafter with reference to the accompanying drawings in which specific embodiments of the invention are shown. This invention may, however, be embodied in many different forms and should not be construed as limited to the illustrated embodiments set forth herein; rather, these illustrated embodiments are provided so that this disclosure will be thorough and complete and will fully convey the scope of the invention to those skilled in the art. Like numbers refer to like elements throughout.

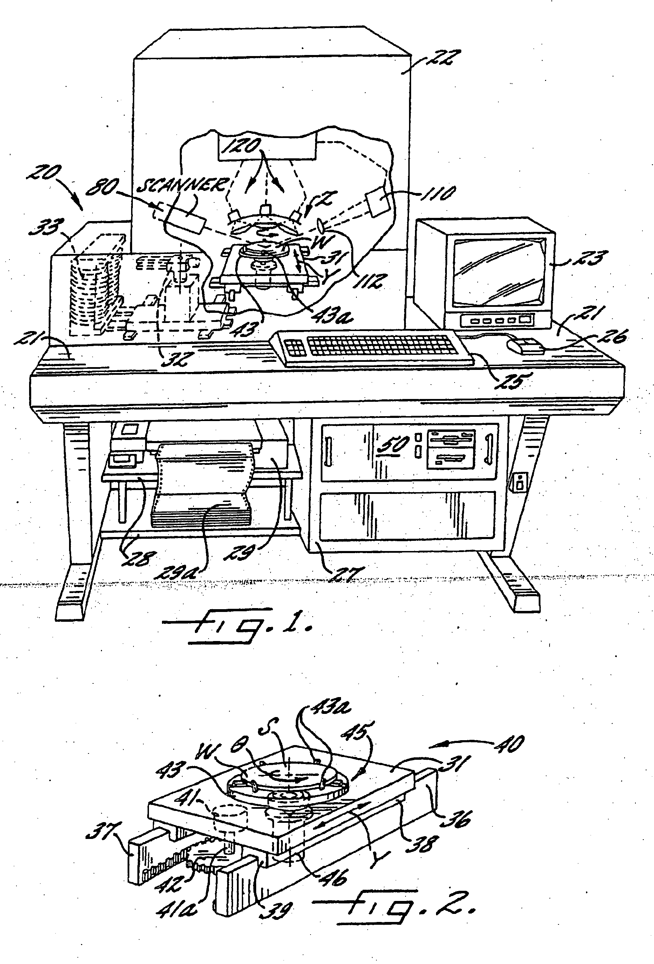

Figure 1 is a perspective view of a surface inspection system **20** for detecting defects such as particles, pits and the like on a surface of a workpiece **W** or article, such as a silicon wafer. Portions of the system **20** are broken away for purposes of clarity and shown by phantom lines to illustrate various elements of the surface inspection system **20**. The surface inspection system **20** is suitably used for inspecting the surface of unpatterned wafers **W**, both with and without deposited films. The system **20** preferably includes means for translationally transporting a workpiece **W** along a material path **P**, means associated with the translational transporting means for rotating the workpiece **W** as it travels along the material path **P**, means for scanning the surface **S** of the workpiece **W** during rotative and translational travel along the material path **P**, and means for collecting light reflected and scattered from the surface **S** of the workpiece **W**.

As illustrated in Figure 1, the surface inspection system **20** is arranged as a workstation including a worktable **21**. Positioned on the worktable **21** is a generally closed and substantially light proof housing **22**, a video display **23**, a keyboard **25**, and a mouse **26**. A cabinet **27** is suspended from the worktable for carrying a system controller **50**. Adjacent the cabinet **27** is a shelf unit **28** for carrying a printer **29** and associated printing paper **29a**. The housing **22** has been partially broken away to better illustrate the inspecting arrangement of the present invention. The inspection of the wafer **W** preferably is conducted in an inspection zone **Z** on an inspection table **31**. A robotic wafer handling device **32** is located adjacent the inspection station **20** to load and unload wafers **W** from a cassette **33** onto the table **31**. The cassette **33** holds a number of wafers **W** and is loaded into the cabinet **27** through a door (not shown). The handling of the wafers **W** inside the housing **22** is done automatically without contact by human hands to avoid contamination or smudges.

As best illustrated in Figures 1-3, the surface inspection system **20** preferably includes means for translationally transporting a workpiece **W** along a material path **P**. The means for transporting a workpiece **W** is illustrated as a transporter **40** arranged to translationally transport a workpiece **W** along a material path **P** and preferably through an inspection zone or area **Z**. The translational transporter **40**, as illustrated, preferably includes a gear **42**, a motor **41** including a shaft **41a** arranged for rotating the gear **42**, and guides **36**, **37** having teeth formed integral therewith. The motor **41** and gear **42** mounted on the motor shaft **41a** form a chuck for the system **50**. The motor **41** of the chuck is preferably mounted to a stage member **43** having a plurality of flanges **43a** extending upwardly therefrom which receives the workpiece **W**, i.e., silicon wafer, thereon along edges of the workpiece **W** as illustrated. This mounting technique for the workpiece **W** reduces smudges or other surface problems which may be associated with positioning the lower surface of the workpiece so as to abuttingly contact an upper surface of the stage member **43**. The stage member **43** preferably is translationally transported along stage guide members **38**, **39** secured to an underside thereof. Other translational and/or rotating means such as a piston and cylinder configuration mounted to the stage member and a motor for rotating the stage member as understood by those skilled in the art may also be used according to the invention.

Also, means for rotating a workpiece **W**, illustrated as a rotator **45**, is associated with the transporter **40** and arranged to rotate a workpiece **W** during translational travel along the material path **P**. The rotator **45** as illustrated preferably includes a motor **46** mounted to an underside of the stage member for providing rotation of the wafer mounted thereon at a predetermined speed. The transporter **40** and the rotator **45** preferably are synchronized and arranged with a scanner **80** so as to form a spiral-shaped narrow angle scan (α) across the surfaces of the workpiece during rotational and translational travel along the material path **P**.

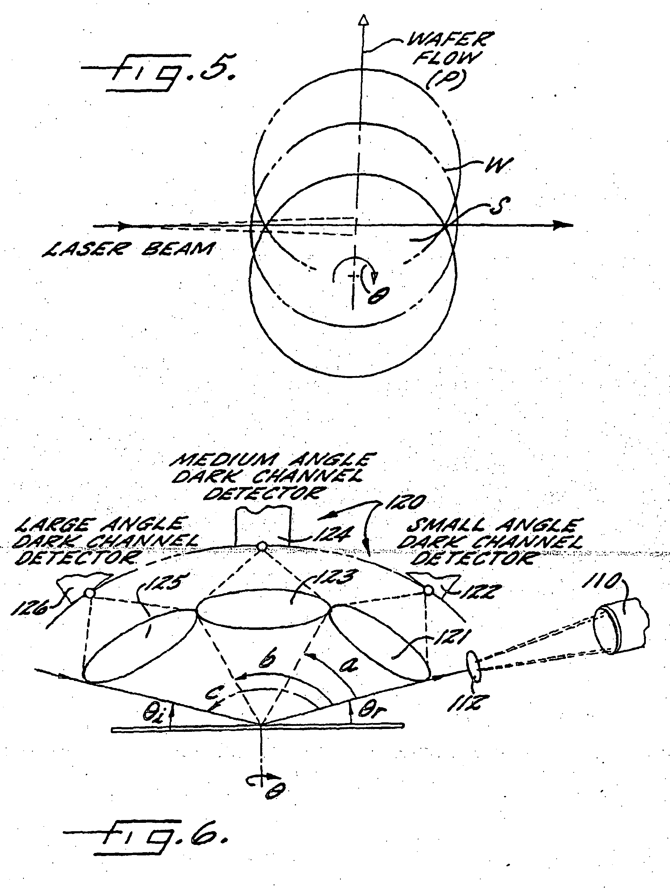

As illustrated in Figures 1 and 3-5, a scanner **80** is positioned and arranged to scan a surfaces of a workpiece **W** during rotational and translational travel along the material path **P**. It will also be understood, however, by those skilled in the art that the scanner **80** may be arranged for rotational and/or translational movement while the workpiece **W** is stationary, or translationally or rotatively moved. In addition, other material paths **P** may be used, e.g., neither the workpiece **W** nor the scanner **80** may be translationally moved and the workpiece tested in only a rotational path. Accordingly, the present invention includes a P-polarized light source **81** or a light source coupled with a P-polarized filter positionally aligned with the light source to generate a P-polarized light beam **B** therefrom, means for receiving the light source and scanning a surface **S** of a workpiece **W**, i.e., a mirror **82**, lenses **84, 86**, deflector **85**, and means for imparting a rotational and translational scan of the workpiece **W**, i.e., the transporter **40** and the rotator **45**.

The scanner **80** preferably includes a light source **81**, i.e., laser, arranged to either generate a P-polarized light beam **B** therefrom or coupled with a P-polarized filter positionally aligned with the light source. The P-polarized light preferably has a spot size which includes a full width, half-maximum of less than 0.1 millimeters. The scanner also includes means positioned to receive the light beam **B** and arranged for scanning the light beam **B** along a relatively narrow scan path (α) across a surface **S** of the workpiece **W** as the workpiece **W** rotationally and translationally travels along the material path **P**. The light source **81** is preferably a visible-light laser with a relatively short wavelength, such as Argon-Ion or solid state, as understood by those skilled in the art. The laser **81** is also preferably the combination of a laser with external optics as understood by those skilled in the art. The laser **81** preferably has a beam diameter of about 0.6 millimeters ("mm").

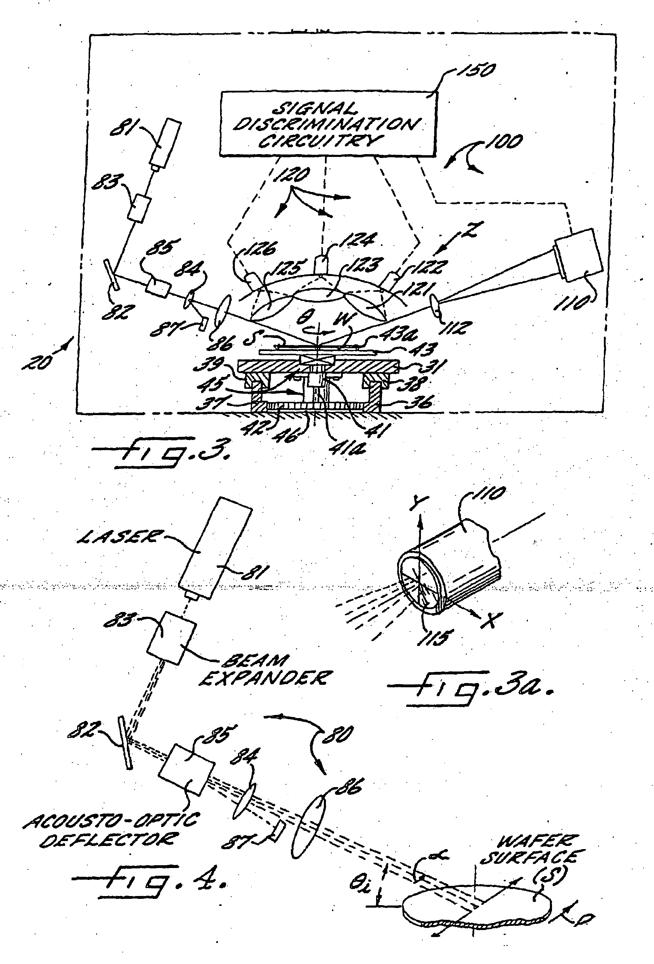

The scanning means preferably includes a deflector **85**, as illustrated, positioned to receive the light beam **B** and arranged to deflect the light beam **B** along a relatively narrow scan path (α). The deflector **85** is preferably an acousto-optical (AO) deflector as illustrated (or a mechanical deflector), and the relatively narrow scan path (α) is preferably no greater than 0.1 radians and, more particularly, in the range of 0.025-0.040 radians. The scan path α preferably directionally corresponds to the path **P** of translational travel and, as best illustrated in Figure 4, preferably is in a generally parallel direction therewith as illustrated by the arrows. The deflection is accomplished by exciting a crystal with high frequency sound waves, for example, which interact with the incident light wave in such a way to shift the light beam **B** and thereby change the angle of propagation. It will be understood that various frequencies of the crystal will responsively cause the light passing therethrough to be deflected at correspondingly various angles of propagation. If the frequency of the sound waves is swept in a sawtooth pattern, the laser beam **B** is scanned through an angle (α) proportional to the frequency. The AO deflector **85** preferably provides a constant scanning speed which, in turn, provides a consistent or a predetermined time response for particles or defects detected from an article surface. Although the present invention is described with reference to an AO deflector **85**, other means for providing narrow angle scans as understood by those skilled in the art, such as a galvanometer, a piezoelectric scanner, a resonant scanner, a rotating mirror, a scanning head, other electronic scanners, or the like, may also be used according to the present invention.

Also, a beam expander **83** is preferably positioned between the laser source **81** and the deflector **85** to expand the light beam **B** prior to entering the acousto-optical deflector **85**. The beam expander **83** preferably provides means for more fully filling the active aperture of the deflector **85** to best utilize the scan angle of the deflector **85**.

The scanner **80** also preferably includes means positionally aligned with the deflector **85** and arranged for directing the light beam from the narrow scan path (α) toward a surface **S** of a workpiece **W** at a relatively low angle of incidence (θᵢ) (relative to the workpiece surface) as the workpiece **W** rotatively and translationally travels along the material path **P**. Although a low angle of incidence (θᵢ) is preferred, the angle of incidence (θᵢ) may be any angle other than normal to the workpiece **W** to provide the advantages of the present invention. The angle of incidence is preferably greater than 45 degrees from normal to the article surface, i.e., less than 45 degrees from the surface of the workpiece **W** and, more particularly, is preferably in the range of 65-85 degrees from normal to the article surface.

The directing means is illustrated as a mirror **82** and a plurality of optical lenses **84, 86** arranged to direct the light beam **B** from the laser 81 toward the surface **S** of the workpiece **W** to be inspected. As the light beam **B** travels from the AO deflector **85**, the beam **B** passes through a cylindrical lens **84** which preferably angularly orients the light beam **B** for a linear scan of the surface of the article during translational and rotational movement of the article through the inspection zone. A stop member **87** is positionally aligned with the cylindrical lens **84** positioned closely adjacent the AO deflector **85** to stop the relatively small portion of light which is not linearly oriented for the scan of the surface of the workpiece **W**. The optical lens **86** positioned after the cylindrical lens **84** is a focusing or f-theta lens, as understood by those skilled in the art, arranged for focusing the light beam on the surface of the workpiece **W**.

The scanner **80** according to the present invention preferably scans the beam of light **B** in a radial direction with rotating motion and linear, lateral, or translational motion (**Y**) to implement a spiral scan pattern as best illustrated in Figure 3. Nevertheless, any other material path **P** for the workpiece **W** may also be used to provide the advantages of the invention.

As best illustrated in Figures 1, 3, 3A, and 6-7, means for collecting light from the surface of a workpiece is preferably a collector **100** having a light channel detector **110** arranged for detecting light specularly reflected from the surface **S** of a workpiece **W** and a dark channel detector **120** positioned adjacent the light channel detector **110** for detecting light scattered from the surface **S** of a workpiece **W**. The light channel detector **110** may be a PMT or a photodiode, but preferably, as understood by those skilled in the art, is a quadrant-cell device, i.e., detector, arranged for X-Y coordinate positioning detection so that deviation in the path of reflected light, i.e., during detection of a defect or particle, may be determined. Such quadrant-cell detectors are manufactured by Advanced Photonix, Inc., formerly Silicon Detector Corp., of Camarillo, California. Although a particular configuration is illustrated, it will be understood that various other rectangular or multiple cell, i.e., bi-cell, configurations may also be used according to the present invention.

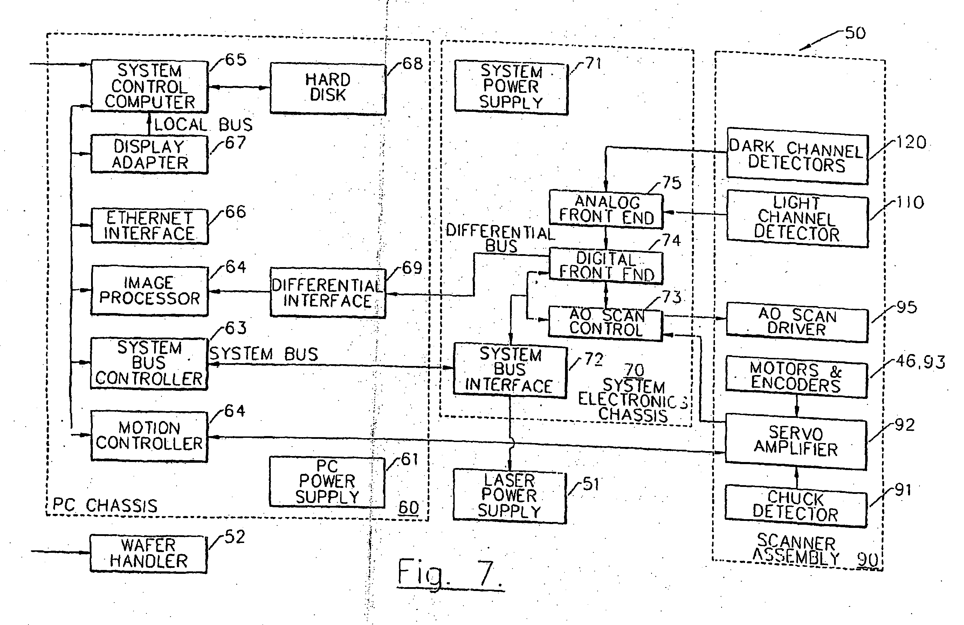

The dark channel detector **120** preferably includes a plurality of collectors **121**, **123**, **125** positioned closely adjacent each other and arranged for collecting components of the scattered light at different respective predetermined angles from the surface **S** of the workpiece **W**. The plurality of collectors **121, 123, 125** of the dark channel detector **120** form segmented optics having at least two collectors positioned adjacent each other. The plurality of collectors **121**, **123**, **125** as illustrated will be understood by those skilled in the art to be compound lenses, and other lens arrangements may also be used according to the present invention. The plurality of collectors **121**, **123**, **125** respectively include a forward channel collector **121** arranged to collect light components scattered forwardly from the surface **S** of the workpiece **W** at a relatively small angle **a**, a center channel collector **123** positioned closely adjacent the forward channel collector **121** and arranged to collect light components scattered substantially normal from the surface **S** of the workpiece **W** at a relatively medium angle **b**, and a back channel collector **125** positioned closely adjacent the center channel collector **123** and arranged to collect light components scattered backwardly from the surface **S** of the workpiece **W** at a relatively large angle **c**. The dark channel detector **120** further includes a forward channel detector **122**, a center channel detector **124**, and a back channel detector **126** each respectively positioned in optical communication with a corresponding collector **121**, **123**, **125**, and means electrically connected to the forward, center and back channel detectors **122**, **124**, **126** and responsive to electrical signals from said detectors for determining the presence of a particle on the surface **S** of a workpiece **W**. The determining means of the collector is preferably electronic signal discrimination circuitry **150**, such as illustrated (see Figures 3 and 7) and understood by those skilled in the art, which receives signals representative of collected light from the light channel detector **110** and the dark channel detector **120**.

As best illustrated in Figures 1, 3, and 6, the relative respective angles **a**, **b**, **c** of the plurality of collectors **121**, **123**, **125** are preferably determined with respect to the angle of reflection (θᵣ) of light from the surface **S** of the workpiece **W** and with respect to forward **a**, backward **c**, and substantially normal **b** light component scattering which occurs relative to the angle of incidence θᵢ of the scan. For example, if the angle of incidence θᵢ is relatively low with respect to the surface plane (high with respect to normal), e.g., 15° from horizontal or -75° from normal, then the forward scattering or small angle **a** is preferably about +22° to +67°, the substantially normal scattering or medium angle is about -25° to +20°, and the backward scattering or large angle is about -72° to -27°. In addition, the advantages of the present invention have been realized, for example, where the angle of incidence θᵢ is 25° from horizontal or -65° from normal with P-polarized visible light having a wavelength of 488 nm, the back channel collector is centered at -38°, and the center channel collector is centered at +10°. When a particle or defect is detected, for example, the forward channel collector **121** is positioned to receive and collect forward scattering **a**, the center channel collector **123** is positioned to receive and collect substantially normal scattering **b**, and the back channel collector **125** is positioned to receive and collect back scattering **c** from the surface of the workpiece with respect to the detected particle or defect, or the like. In the direction generally perpendicular to the plane of incidence, approximately 73° of total angle is captured in the above example. This is about 0.64 steridians of solid angle per segment or a total of about 1.92 steridians which is a substantial improvement over previous known detectors.

As best illustrated in the perspective view of Figure 1 and the schematic view of Figure 7, the surface inspection system **20** preferably is computer controlled. The system controller **50** operates the inspection system **20** under the supervision and direction of a human operator, stores and retrieves data generated by the system **20**, and performs data analysis preferably responsive to predetermined commands. The scanner assembly portion **90** illustrated cooperates with the scanner **80** and includes a chuck detector **91** which transmits a position to a servo-amplifier **91**. The relative position of the article being inspected is communicated to the system **50** via motors **41**, **46** and encoders **93** mounted thereto. The position data is transmitted to the AO scan control **73** which preferably forms a portion of the system electronics chassis **70** and which responsively drives the AO deflector **85** via a AO scan driver **95**.

The system electronics chassis **70** includes a system power supply **71** and receives signals from the dark channel detectors **120** and the light channel detector **110** respectively representative of the scattered and the specularly reflected light. As understood by those skilled in the art, these data signals are conventionally electrically communicated in an analog format to analog front end electronics **75** and are converted to digital format by digital front end electronics **74** or the like. The digital front end electronics **74** also cooperates with the AO scan control **73**, the system bus interface **72**, and the differential interface **69**, i.e., differential bus, of the personal computer ("PC") chassis **60**. The system bus interface **72** also communicates with a laser power supply **51** of the surface inspection system **50**.

The PC chassis **60** includes a PC power supply **61** arranged for supplying power to the PC. The PC chassis **60** also has a motion controller **64** which responsively communicates with the servo amplifier **92** of the scanner assembly **90** and a system control computer **65**, i.e., microprocessor, or controller. The system control computer **65** preferably electrically communicates with a wafer handler **52** for responsively sending and receiving predetermined command signals for mounting and handling the article or wafer being inspected as set forth above. The system control computer **65** also preferably communicates with a hard disk drive **68**, a display adapter **67** arranged to communicate with the display, and an ethernet interface **66** arranged for network or other system **50** communication. An image processor **64** electrically communicates with the differential interface **69** and the system control computer **65** for processing the image of the surface of the inspected article and/or defects, flaws, undulations, or particles thereon. The surface inspection system **50** as illustrated in Figure 7, and as understood by those skilled in the art, preferably is formed of a combination of software and hardware which forms these various components, or combinations thereof, of the system **50**.

As illustrated in Figures 1-7, methods of inspecting a surface **S** of an article or workpiece **W** for defects are also provided according to the present invention. A method of inspecting a surface **S** of a workpiece **W** preferably includes rotatively and translationally transporting a workpiece **W** along a material path **P** and scanning a relatively narrow scan path α of light across a surface of the workpiece **W** as the workpiece **W** travels along the material path **P**. The step of rotatively and translationally transporting a workpiece along a material path preferably is synchronized with the step of scanning a surface of the workpiece so as to impart a substantially spiral-shaped scan of the surface of the workpiece. Light specularly reflected from and light scattered from the surface **S** of the workpiece **W** preferably are separately collected. The light which is scattered from the workpiece surface is collected as separate light components at different angles. For example, light components scattered substantially normal from the surface **S** of the workpiece **W** and light components scattered backwardly from the surface **S** of the workpiece **W** are separately collected and compared to thereby ascertain differences in the angular distribution of the scattered light. Light scattered from the surface **S** of the workpiece **W** is separately collected by a plurality of collectors **121, 123, 125** at a plurality of predetermined scattering angles **a**, **b**, **c**. Preferably, the collectors are positioned to collect forwardly scattered light components, backwardly scattered light components, and light components scattered in a direction substantially perpendicular to the surface of the workpiece. Light detected by the various collectors signifies a defect in or on the surface **S** of the workpiece **W**.

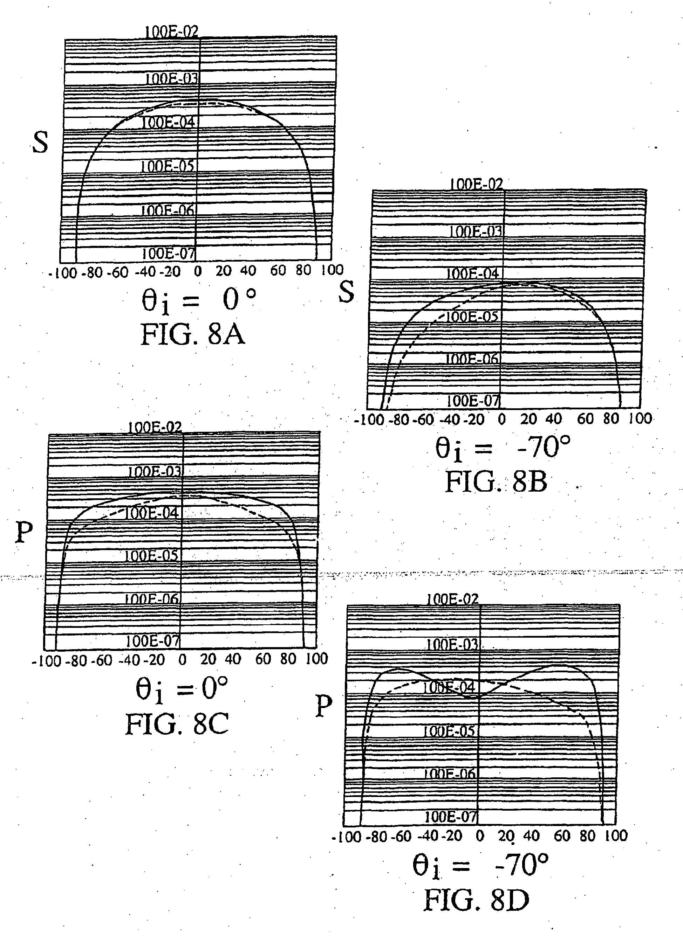

In order to determine whether the defect is a particle defect or a pit, differences in the angular distribution of the light scattered from the workpiece are detected. This is achieved by comparing the amount of light collected by one of the collectors to the amount of light collected by one or more of the other collectors. The light detected by the detectors **122**, **124** and **126**, particularly the center channel detector **124** and the back channel detector **126** can be used to distinguish particles located on the workpiece surface from pits located in the workpiece surface when P-polarized light is used in the scanner. Specifically, when the defect is a pit in the workpiece surface, P-polarized light scattered from the workpiece surface forms a pattern in which the amount of light scattered to the center channel collector **124** is greater than the amount of light scattered to the back channel collector **126**. This has been found to be particularly the case with small pits, i.e., pits having a diameter of no more than about 300 nm. In contrast, when the defect is a particle on the workpiece surface, P-polarized light scattered from the wafer surface forms a pattern in which the amount of light scattered to the center channel collector **124** is less than the light scattered to the back channel collector **126**. Figures 8-15 show examples of the scattered light distributions for pits and particles of various sizes when P-polarized light is used. Figure 8 is a comparison between scatter diagrams for 90 nm tungsten particles on the surface of the workpiece and 180 nm pits in the surface of the workpiece. As seen from the two scatter diagrams on the left side of Figure 8, the use of either S-polarized light and the use of a normal or perpendicular angle of incidence, i.e., θᵢ = 0°, with either S or P-polarized light does not provide an effective method of distinguishing the particles from the pits in the surface of the workpiece. The angular distribution of the light scattered from the workpiece is substantially similar for pit defects and for particle defects. Likewise, as seen from the scatter diagram in the upper right quadrant, when S-polarized light is used at a non-normal angle of incidence, for example θᵢ = -70°, there is relatively little difference in the shape of the scatter curves for pits and for particles. However, when P-polarized light is used, as seen from the diagram in the lower right quadrant, the particles scatter light in such a way that a dip is detected in the region approximately perpendicular to the workpiece surface. The pits create a distinctly different angular distribution pattern, by which pits can be distinguished from particles.

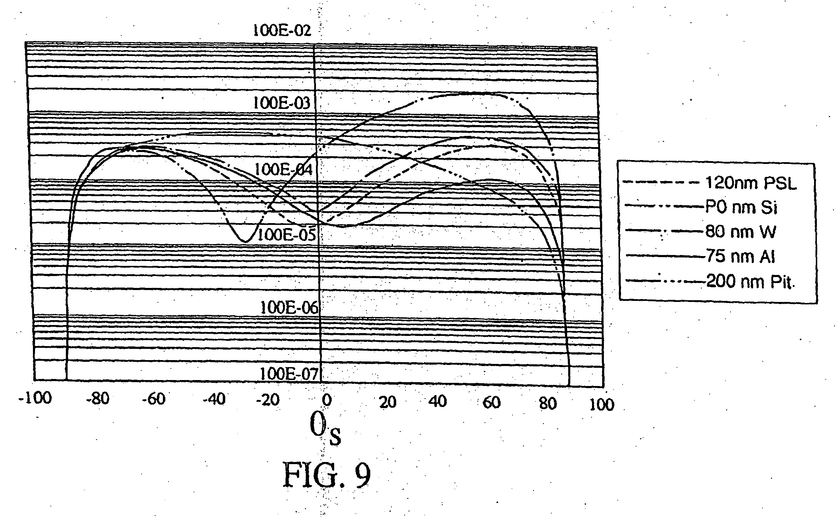

Figure 9 illustrates the angular distribution patterns obtained from various particle materials. When P-polarized light is used at an angle of incidence, θᵢ = -70°, the particles may be distinguished by a characteristic dip in the region approximate the angle normal the workpiece surface (0°) thus allowing the presence of particles on the surface of the workpiece to be distinguished from the presence of pits within the workpiece. Specifically, the 120 nm psi particles, the 90 nm silicon particles, the 80 nm tungsten particles, and the 75 nm aluminum particles all exhibit a characteristic dip in the vicinity of the direction normal or perpendicular to the surface of the 5 workpiece (0°). The specific minimum point varies for each particle, but all are generally within a region covering ± about 25° from the 0 or perpendicular direction. The scattering pattern from the pit does not exhibit a dip.

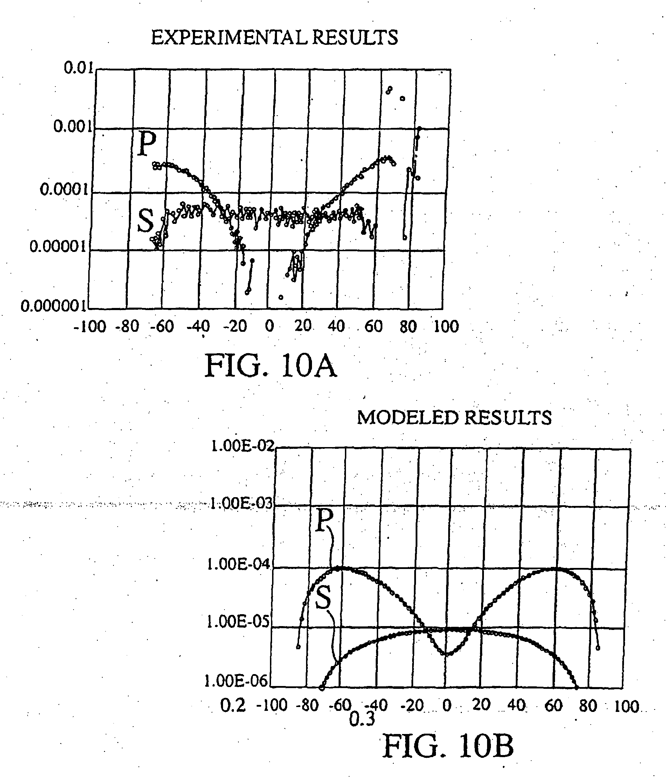

Figure 10 compares the angular distributions for modeled results and experimental results using a 0.1 micron psl sphere with a laser beam at a wavelength of 488 nm and a -75° angle of incidence using both P-polarized light and S-polarized light. As shown, the P-polarized light produces a characteristic dip in the vicinity of 0°. No such dip occurs using S-polarized light.

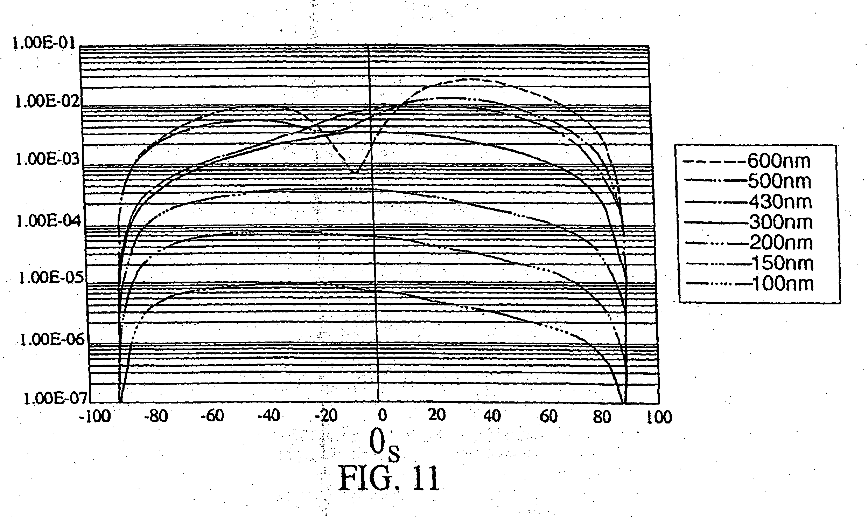

Figure 11 illustrates modeled scatter for pits of various diameters. As shown in Figure 11, when P-polarized light is used at an angle of incidence, θᵢ = -70°, the amount of backwardly scattered light is greater than the amount of forwardly scattered light for small pits. This is particularly the case where the diameter of the pit is no more than about 300 nm.

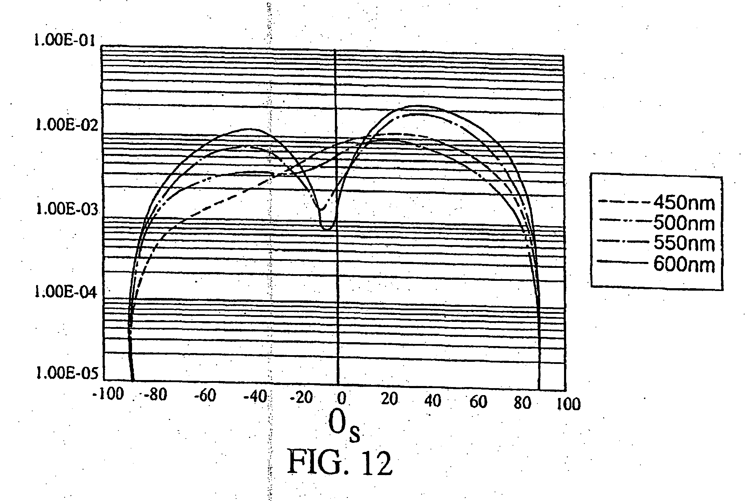

Figure 12 illustrates the angular distribution of light scattered by larger pits, i.e., pits having a diameter of more than about 430 nm, located in the surface of the workpiece.

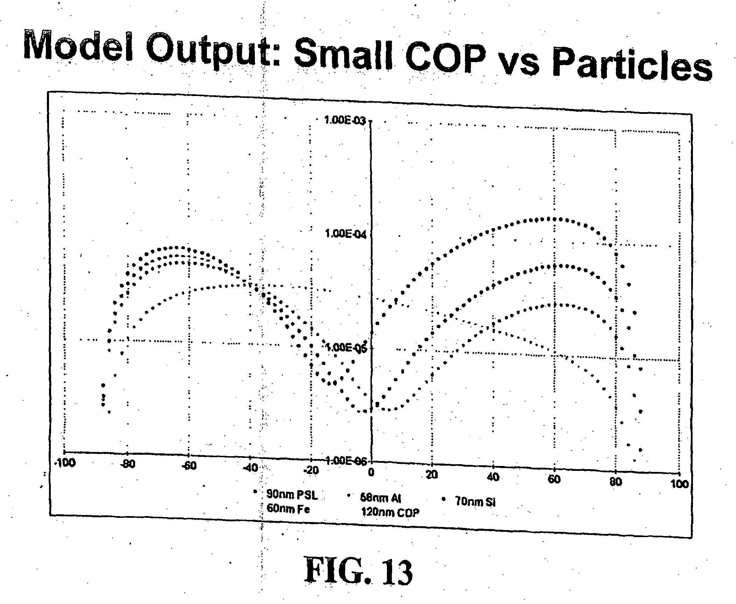

Figures 13, 14 and 15 illustrate representative angular distribution patterns for small COPS, medium COPS and large COPS respectively, versus particles using P-polarized light at an angle of incidence of -70°. In Figure 13, it will be seen that a 120 nm COP exhibits a convex shaped distribution pattern, with the amount of light backscattered at angles ranging from -20 to -60 being higher than the light forwardly scattered at angles of +20 and above. Particles of various compositions with sizes of 90 nm and below all exhibit a characteristic concave distribution pattern, with a "dip" in the vicinity of 0°. For the larger sized particles, e.g. 90 mn psl, the intensity of forwardly scattered light is greater than the backscattered light.

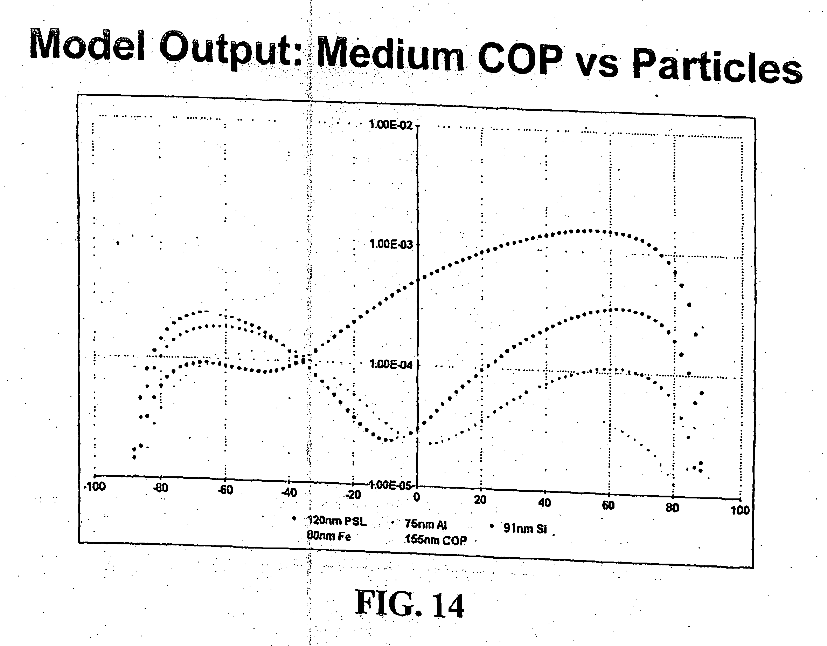

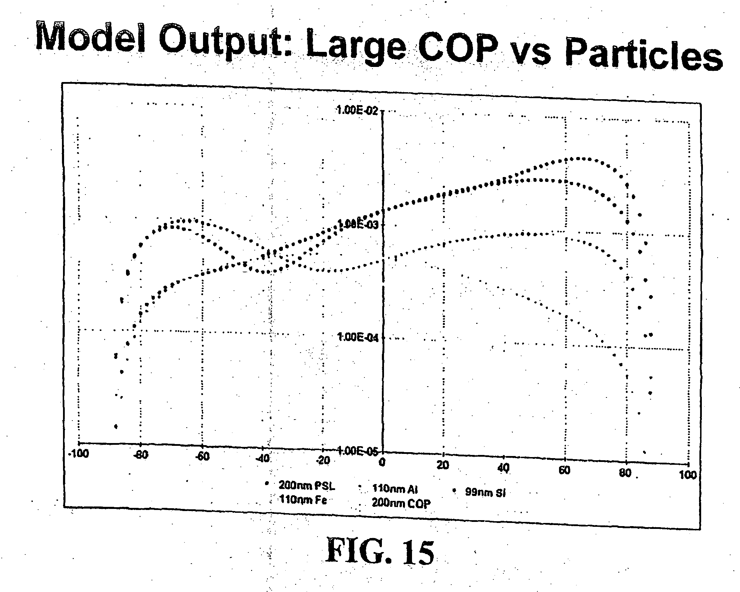

As seen from Figure 14, the angular distribution pattern for a somewhat larger 155 nm COP is generally similar to the 120 nm COP of Figure 13, with the amount of backscattered light at angles of from -20 to -80 being greater than the amount of forwardly scattered light. The smaller sized particles, e.g. 91 nm and smaller consistently exhibit a concave distribution pattern with a "dip" at or near 0°, and with the amount of forwardly scattered light being greater than the amount of backscattered light. The larger particles (120 nm psl) show a markedly greater difference between the amount of forwardly scattered light and backscattered light. This trend is also seen in Figure 15 with particles as large as 200 nm.

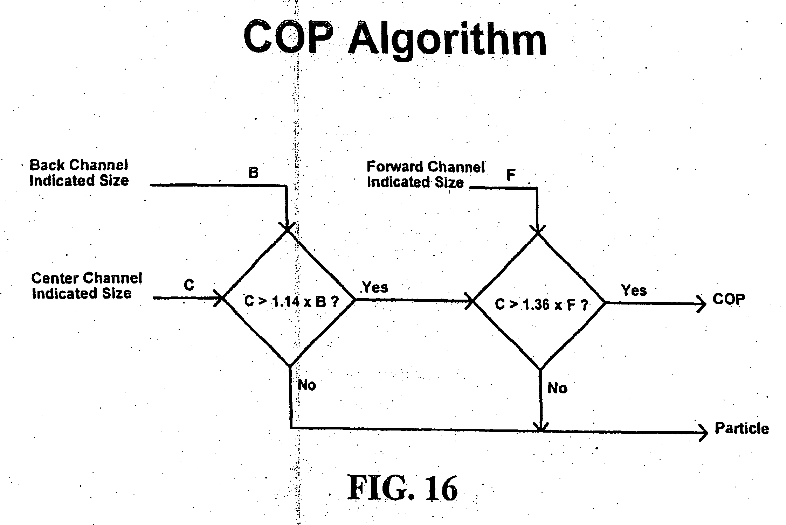

From these characteristic angular distribution patterns, it is possible to distinguish COPS from particles. In particular, if the ratio of the intensity of the signal from the center channel detector **124** to the signal from the back channel detector **125** is less than a predetermined amount, the defect may be classified as a particle. If the ratio of the intensity of the center channel detector **124** signal to the forward channel **122** detector signal is more than a predetermined amount, the defect may be classified as a pit. Figure 16 illustrates one suitable algorithm for analyzing the information from the detectors to distinguish particles from COPS. If the ratio of the center channel indicated size C to the back channel indicated size B is less than the predetermined constant, in this instance 1.14, then the defect is classified as a particle. Stated otherwise, a signal event B representing the back channel indicated size and a signal event C representing the center channel indicated size are directed to a comparator where the value of C is compared to the value of B times a predetermined constant, in this instance 1.14. If C is not greater than 1.14 times B, then the signal event is classified as a particle. If C is greater than 1.14 times B, then C is compared to a value F representing the forward channel indicated size. If C is greater than a predetermined constant (in this instance 1.36) times the value of F, then the signal event is classified as a COP. If not, the event is classified as a particle.

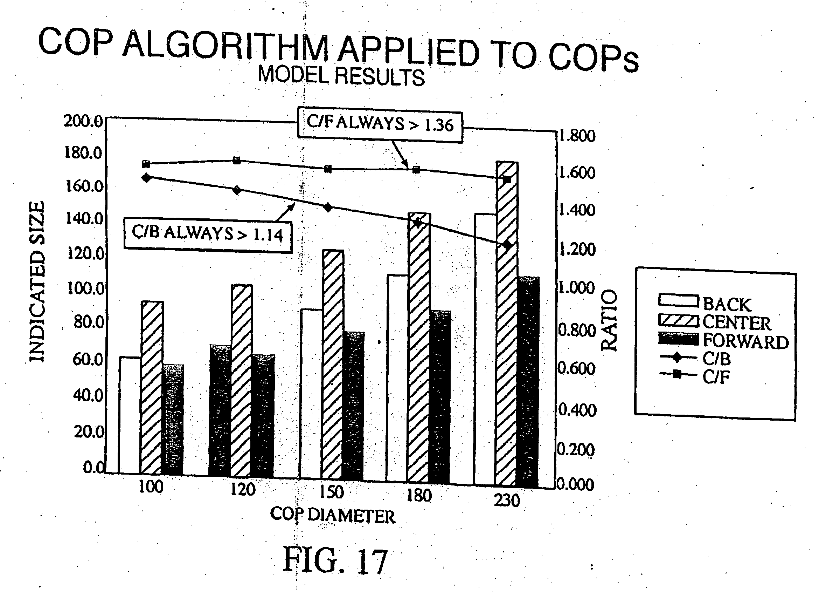

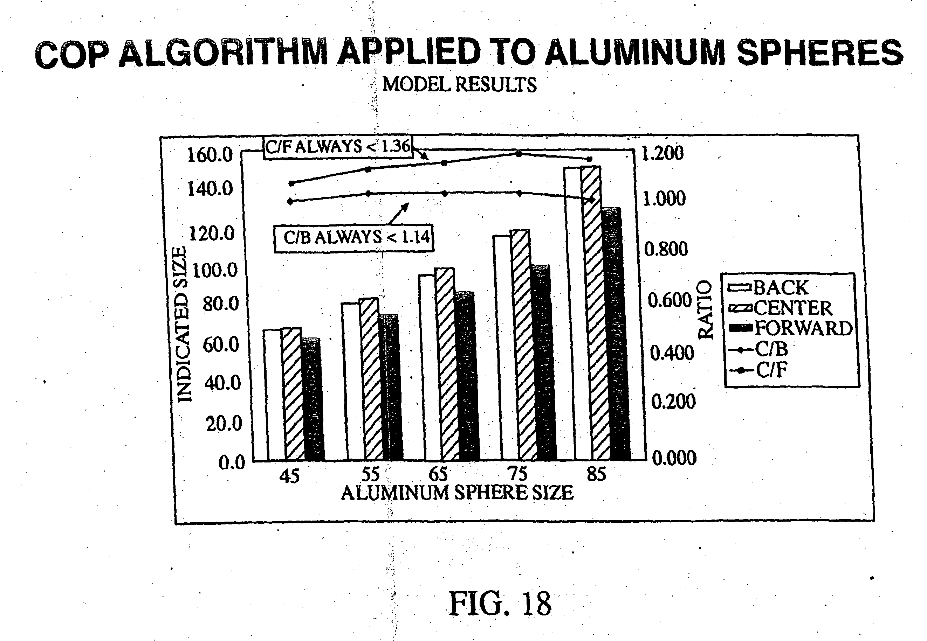

The application of this algorithm as applied to COPS is graphically illustrated in Figure 17. The application of this algorithm to particles, in this instance aluminum particles, is graphically illustrated in Figure 18. Figures 17 and 18 illustrate how modeled data or experimental data for particles or COPS of various sizes can be used to derive constants for use in the type of algorithm shown in Figure 16. It should be apparent to those of skill in the art from this illustration that the present invention is not limited to the particular algorithm described herein, and that other approaches and other specific algorithms may be used to process the data obtained from the various detectors and to distinguish between pits and particles in accordance with the present invention.

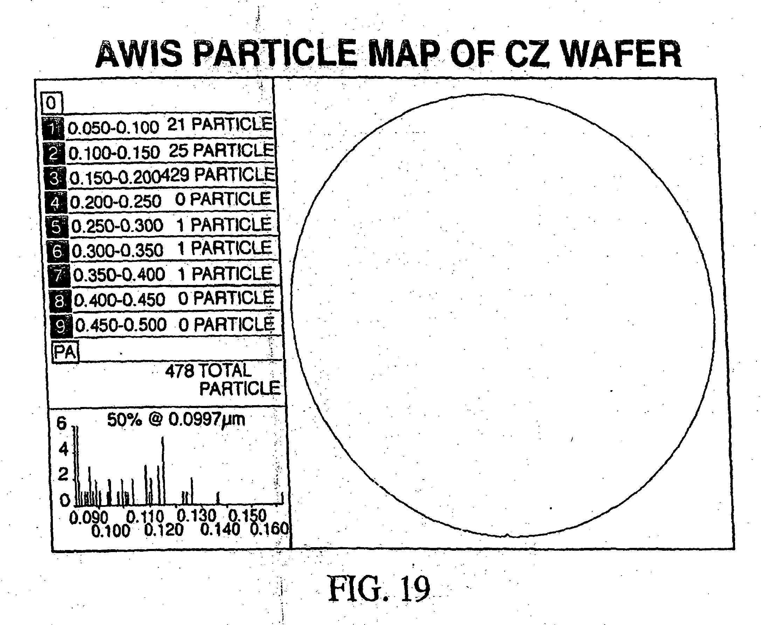

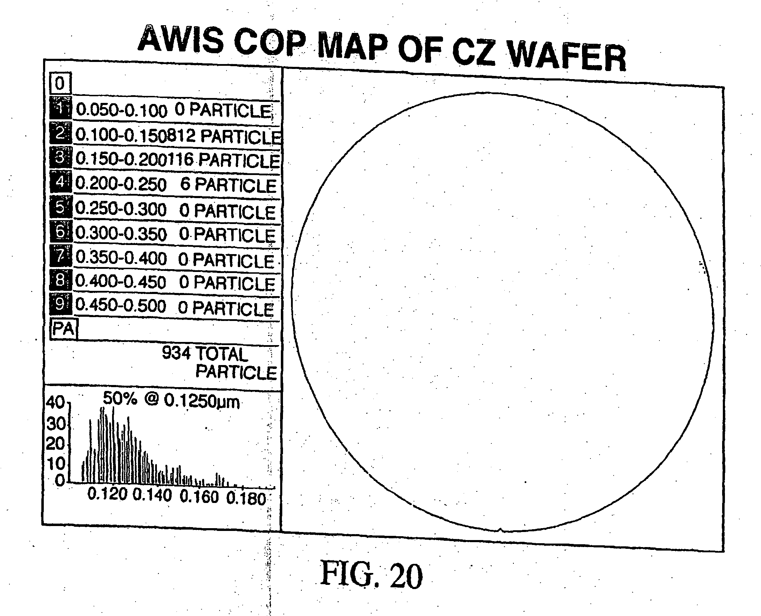

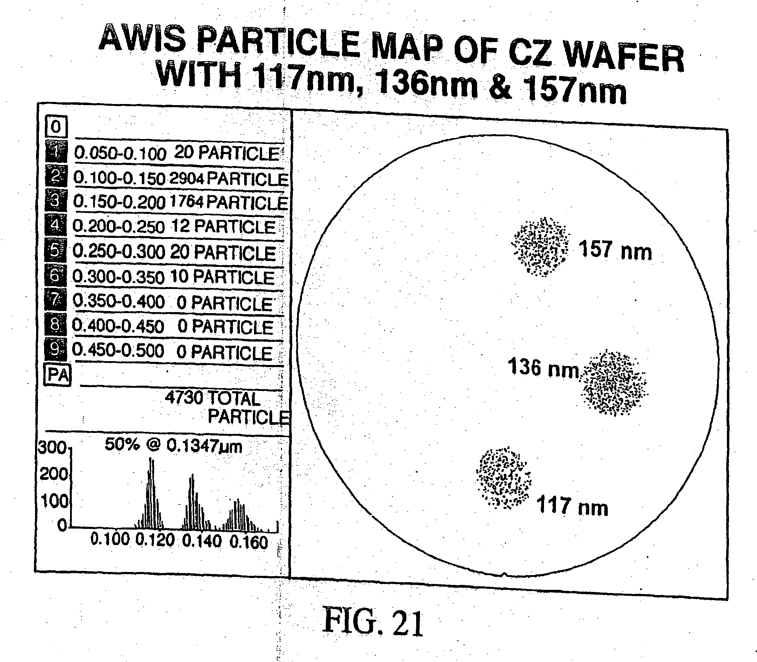

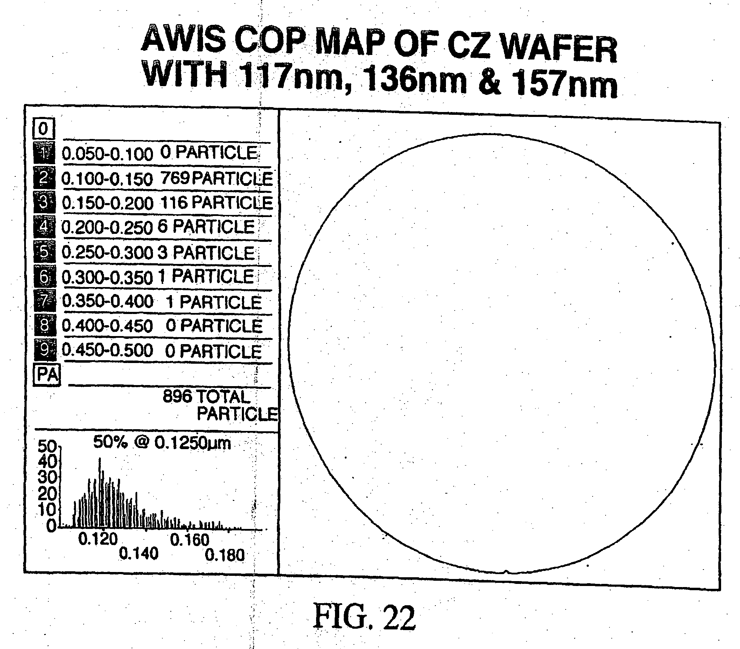

During the scanning of a wafer, as signal events are thus classified into particle defects and pit defects, the resulting data may be stored in memory in a suitable format, such as a raster format, to define a "map" of the particles or pits on the surface of the wafer. In addition, the intensity values of the signal events, representing the indicated sizes of the particles or pits, may be stored to provide a histogram illustrating the size classifications of the defects. This information may be communicated to the user as a visual representation of the wafer on a video display. Figure 19, for example-, illustrates a video display which presents a particle map of a clean wafer, together with a histogram showing the distribution of particle sizes. Figure 20 shows a map of the COPS or pits for the same wafer, and a size histogram for the pits. Figures 21 and 22 illustrate the sensitivity and selectivity of the apparatus and method of this invention. The same wafer which was used to produce the particle map of Figure 19 was "seeded" with particle defects of known size in three regions on the wafer. Figure 21 is a particle map of that wafer, and the three regions of seeded particles are clearly evident. Figure 22 is a COP map of that same wafer. By comparing Figure 20 (before seeding) with Figure 22 (after seeding) it is evident that the COP map and the histogram are substantially unaffected by the heavy concentrations of seeded particles on the wafer.

In the drawings and specification, there have been disclosed typical preferred embodiments of the invention, and, although specific terms are employed, these terms are used in a descriptive sense only and not for purposes of limitation. The invention has been described in considerable detail with specific reference to various illustrated embodiments.

## Claims

1. A surface inspection system comprising:
- an inspection station for receiving a silicon wafer (W);
- a scanner (80) positioned and arranged to scan a surface of the silicon wafer at said inspection station, said scanner including a light source (81) arranged to project a beam of P-polarized light at an angle of incidence other than normal to the surface of the silicon wafer and means (85) positioned to scan the P-polarized light beam across the surface of the silicon wafer;
- a plurality of collectors (121, 123, 125) arranged for collecting components of light scattered at different angles from the surface of the silicon wafer by defects present at the silicon wafer surface; and
- a photodetector (122, 124, 126) associated with each said collector for detecting the collected light and producing a signal;
**characterized in that** the inspection system includes means responsive to the signals produced by said photodetectors for determining differences in the light components scattered from the silicon wafer (W) at different angles and collected by different ones of said collectors, and for classifying a surface defect as a particle or a crystal-originated pit based upon said differences.

2. A surface inspection system as defined in claim 1, wherein said means for determining differences in the scattered light components includes means for comparing the amount of light scattered in a direction perpendicular to the surface of the silicon wafer (W) to the amount of light backscattered from the surface of the silicon wafer.

3. A surface inspection system as defined in claim 1, wherein said means for determining differences in the scattered light components includes means for identifying an intensity dip in the angular distributions of the scattered light.

4. A surface inspection system as defined in claim 1, wherein said means for determining differences in the scattered light components includes means for comparing the signals from photodetectors (122, 124, 126) located at different angles.

5. A surface inspection system as defined in claim 4, wherein said plurality of collectors (121, 123, 125) includes a first collector (123) positioned and arranged to collect light components scattered generally perpendicular from the surface of the silicon wafer (W), and a second collector (121, 125) positioned and arranged to collect light components scattered at a non-perpendicular angle from the surface of the silicon wafer.

6. A surface inspection system as defined in claim 5, wherein said scanner (80) is positioned and arranged to direct the light beam onto the surface of the silicon wafer (W) at a predetermined angle of incidence other than perpendicular, and said second collector (125) is positioned and arranged to collect backscattered light components.

7. A surface inspection system as defined in claim 6, wherein said plurality of collectors (121, 123, 125) additionally includes a third collector (121) positioned and arranged to collect light components forwardly scattered from the surface of the silicon wafer (W).

8. A surface inspection system as defined in claim 6, wherein said scanner (80) is positioned and arranged to direct the light beam onto the surface of the silicon wafer at an angle of incidence of at least -50° from perpendicular to the silicon wafer surface.

9. A surface inspection system as defined in claim 5, wherein said first collector (123) is arranged to collect light components scattered over a range of angles of approximately ± 20° from perpendicular to the silicon wafer surface.

10. A surface inspection system as defined any one of claims 1 to 9, additionally including means to form a first map identifying the locations of crystal originated pit defects on the silicon wafer surface and a second map identifying the locations of particle defects on the silicon wafer surface.

11. A surface inspection system as defined in claim 10, including a video display (23) operatively associated with said means to form said first and second maps for displaying a visual representation of said first and second maps.

12. A surface inspection system as defined in claim 1 wherein said light source is arranged to project a beam of P-polarized light at an angle of incidence at least -50 degrees from perpendicular to the silicon wafer surface, and wherein said plurality of collectors (121, 123, 125) includes a center channel collector (123) positioned and arranged to collect light components scattered perpendicular from the surface of the silicon wafer (W), and a back channel collector (125) positioned and arranged to collect light components backscattered from the surface of the silicon wafer; and wherein said means for determining differences in the scattered light components comprises a comparator responsive to electrical signals from the photodetector (122, 124, 126) of said center channel collector (123) and said back channel collector (125) for detecting differences in the angular distributions of the scattered P-polarized light from the silicon wafer.

13. A surface inspection system as defined in claim 12, wherein said comparator includes a first comparer for identifying a defect as a particle if the ratio of the intensity of the center channel photodetector signal to the back channel photodetector signal is less than a predetermined amount.

14. A surface inspection system as defined in claim 13, additionally including a forward channel collector (121) positioned and arranged to collect light components forwardly scattered from the surface of the silicon wafer, and a photodetector (122) is associated with the forward channel collector (121) and is operable for generating an electrical signal in response to the collected light, and wherein said comparator includes a second comparer for identifying a defect as a crystal originated pit if the ratio of the intensity of the center channel photodetector signal to the forward channel photodetector signal is more than a predetermined amount.

15. A surface inspection method comprising the steps of scanning a beam of P-polarized light across the surface of a silicon wafer (W) at an angle of incidence other than normal to the surface of the silicon wafer and collecting components of light scattered at different angles from the surface of the silicon wafer by defects present at the silicon wafer surface; **characterized in that** the inspection method includes the steps or determining differences in the light components scattered from the silicon wafer at different angles and classifying a surface defect as a particle or a crystal-originated pit based upon said differences.

16. A method as defined by claim 15, wherein said step of determining differences in the scattered light components comprises comparing the amount of light scattered in a direction perpendicular to the surface of the silicon wafer (W) to the amount of light backscattered from the surface of the silicon wafer.

17. A method as defined in claim 15, wherein said step of determining differences in the scattered light components includes identifying an intensity dip in the angular distribution of the scattered light.

18. A method as defined in claim 15, wherein the collected components of light scattered at different angles from the surface of the silicon wafer (W) are detected by photodetectors (122, 124, 126) which produce signals and wherein said step of determining differences in the light components scattered from the silicon wafer includes comparing the signals produced by photodetectors located at different angles.

19. A method as defined in claim 18, wherein the step of collecting components of light scattered at different angles includes collecting light components scattered generally perpendicular from the surface of the silicon wafer (W) in a first collector (123), and collecting light components scattered at a non-perpendicular angle from the surface of the silicon wafer in a second collector (121, 125).

20. A method as defined by claim 15, wherein said step of determining differences in the scattered light components includes comparing the intensities of scattered light components collected at various angles relative to the surface of the silicon wafer (W).

21. A method as defined by any one of claims 15 to 20, additionally including forming a first map identifying the locations of crystal originated pit defects on the silicon wafer surface.

22. A method as defined by claim 21, including forming a second map identifying the locations of particle defects on the silicon wafer surface.

23. A method as defined in claim 22, including displaying said first and second maps on a video display (23).

24. A method as defined by claim 15, wherein .said step of scanning a beam across the surface of the silicon wafer comprises projecting the beam of light onto the silicon wafer at an angle of incidence of at least 50 degrees from perpendicular to the silicon wafer (W).

## Patentansprüche

1. Oberflächenprüfsystem, umfassend:
- eine Prüfstation zur Aufnahme eines Siliziumwafers (W),
- ein zum Abtasten einer Oberfläche des Siliziumwafers in der Prüfstation positionierter und angeordneter Abtaster (80), wobei der Abtaster eine Lichtquelle (81), welche angeordnet ist, einen Strahl von P-polarisiertem Licht unter einem Einfallswinkel, welcher nicht senkrecht ist, auf die Oberfläche des Siliziumwafers zu projizieren, und Mittel (85), welche positioniert sind, um den P-polarisierten Lichtstrahl über die Oberfläche des Siliziumwafers zu scannen, umfasst,
- eine Mehrzahl von Kollektoren (121, 123, 125), welche angeordnet sind, unter unterschiedlichen Winkeln von der Oberfläche des Siliziumwafers durch auf der Oberfläche des Siliziumwafers vorliegende Defekte gestreute Lichtkomponenten aufzusammeln, und
- einen jedem der Kollektoren zugeordneten Photodetektor (122, 124, 126), um das gesammelte Licht zu detektieren und ein Signal zu erzeugen,
**dadurch gekennzeichnet, dass**
das Prüfsystem ein auf die von den Photodetektoren erzeugten Signale reagierendes Mittel zum Bestimmen von Unterschieden der von dem Siliziumwafer (W) unter verschiedenen Winkeln gestreuten und von unterschiedlichen Kollektoren aufgesammelten Lichtkomponenten und zum Klassifizieren eines Oberflächendefekts als ein Teilchen oder als eine vom Kristall herrührende Grube aufgrund dieser Unterschiede, umfasst.

2. Oberflächenprüfsystem gemäß Anspruch 1, wobei das Mittel zum Bestimmen von Unterschieden der gestreuten Lichtkomponenten Mittel zum Vergleich der Menge des in einer senkrecht zu der Oberfläche des Siliziumwafers gestreuten Lichtes mit der Menge des von der Oberfläche des Siliziumwafers rückgestreuten Lichtmenge umfasst.

3. Oberflächenprüfsystem gemäß Anspruch 1, wobei das Mittel zum Bestimmen von Unterschieden der gestreuten Lichtkomponenten Mittel zur Identifikation einer Intensitätssenke in den Winkelverteilungen des gestreuten Lichts umfasst.

4. Oberflächenprüfsystem gemäß Anspruch 1, wobei das Mittel zum Bestimmen von Unterschieden der gestreuten Lichtkomponenten Mittel zum Vergleichen der Signale von unter verschiedenen Winkeln angeordneten Photodetektoren (122, 124, 126) umfasst.

5. Oberflächenprüfsystem gemäß Anspruch 4, wobei die Mehrzahl von Kollektoren (121, 123, 125) einen ersten Kollektor (123), welcher positioniert und angeordnet ist, um im Wesentlichen senkrecht von der Oberfläche des Siliziumwafers (W) gestreute Lichtkomponenten zu sammeln, und einen zweiten Kollektor (121, 125), welcher positioniert und angeordnet ist, um unter einem nicht senkrechten Winkel von der Oberfläche des Siliziumwafers gestreute Lichtkomponenten zu sammeln, umfasst.

6. Oberflächenprüfsystem gemäß Anspruch 5, wobei der Abtaster (80) positioniert und angeordnet ist, um den Lichtstrahl unter einem von senkrecht verschiedenen vorherbestimmten Einfallswinkel auf die Oberfläche des Siliziumwafers (W) zu leiten, und wobei der zweite Kollektor (125) positioniert und angeordnet ist, um rückgestreute Lichtkomponenten zu sammeln.

7. Oberflächenprüfsystem gemäß Anspruch 6, wobei die Mehrzahl von Kollektoren (121, 123, 125) zusätzlich einen dritten Kollektor (121) umfasst, welcher positioniert und angeordnet ist, um von der Oberfläche des Siliziumwafers (W) vorwärtsgestreute Lichtkomponenten zu sammeln.

8. Oberflächenprüfsystem gemäß Anspruch 6, wobei der Abtaster (80) positioniert und angeordnet ist, um den Lichtstrahl unter einem Einfallswinkel von mindestens -50° von der Senkrechten der Siliziumwafersoberfläche auf die Oberfläche des Siliziumwafers zu leiten.

9. Oberflächenprüfsystem gemäß Anspruch 5, wobei der erste Kollektor (123) angeordnet ist, um über einen Winkelbereich von etwa ±20° von der Senkrechten der Siliziumwaferoberfläche gestreute Lichtkomponenten zu sammeln.

10. Oberflächenprüfsystem gemäß einem der Ansprüche 1 bis 9, welches zusätzlich Mittel umfasst, um eine erste Karte, welche die Orte von vom Kristall herrührenden Gruben auf der Siliziumwaferoberfläche identifiziert, und eine zweite Karte, welche die Orte von Teilchendefekten auf der Siliziumwaferoberfläche identifiziert, zu bilden.

11. Oberflächenprüfsystem gemäß Anspruch 10, umfassend eine Videoanzeige (23), welche den Mitteln zur Bildung der ersten und zweiten Karten wirksam zugeordnet ist, um so eine visuelle Darstellung der ersten und zweiten Karten anzuzeigen.

12. Oberflächenprüfsystem gemäß Anspruch 1, wobei die Lichtquelle angeordnet ist, um einen Strahl von P-polarisiertem Licht unter einem Einfallswinkel von mindestens -50° von der Senkrechten auf die Siliziumwaferoberfläche zu projizieren, und wobei die Mehrzahl von Kollektoren (121, 123, 125) einen Mittelkanalkollektor (123), welcher positioniert und angeordnet ist, um senkrecht von der Oberfläche des Siliziumwafers (W) gestreute Lichtkomponenten zu sammeln, und einen Rückkanalkollektor (125), welcher positioniert und angeordnet ist, um von der Oberfläche des Siliziumwafers rückgestreute Lichtkomponenten zu sammeln, umfasst, und wobei das Mittel zum Bestimmen von Unterschieden der gestreuten Lichtkomponenten einen Komparator umfasst, welcher auf elektrische Signale von den Photodetektoren (122, 124, 126) des Mittelkanalkollektors (123) und des Rückkanaldetektors (125) reagiert, um Unterschiede der Winkelverteilung des gestreuten P-polarisierten Lichts von dem Siliziumwafer zu detektieren.

13. Oberflächenprüfsystem gemäß Anspruch 12, wobei der Komparator einen ersten Vergleicher zur Identifizierung eines Defektes als Teilchen, wenn das Intensitätsverhältnis des Mittelkanalphotodetektorsignals zu dem Rückkanalphoto-Detektorsignal weniger als ein vorherbestimmter Wert ist, umfasst.

14. Oberflächenprüfsystem gemäß Anspruch 13, zusätzlich umfassend einen Vorwärtskanalkollektor (121), welcher positioniert und angeordnet ist, um von der Oberfläche des Siliziumwafers vorwärtsgestreute Lichtkomponenten zu sammeln, und einen Photodetektor (122), welcher dem Vorwärtskanalkollektor (121) zugeordnet ist und betrieben werden kann, um ein elektrisches Signal als Antwort auf das gesammelte Licht zu erzeugen, und wobei der Komparator einen zweiten Vergleicher zur Identifizierung eines Defekts als eine vom Kristall herrührende Grube, wenn das Intensitätsverhältnis des Mittelkanalphotodetektorsignals und des Vorwärtskanalphotodetektorsignals größer als ein vorherbestimmter Wert ist, umfasst.

15. Oberflächenprüfverfahren umfassend die Schritte Abtasten mit einem Strahl von P-polarisiertem Licht über die Oberfläche eines Siliziumwafers (W) unter einem von senkrecht zu der Oberfläche des Siliziumwafers verschiedenen Einfallswinkels, und Sammeln von unter verschiedenen Winkeln von der Oberfläche des Siliziumwafers durch auf der Siliziumwaferoberfläche vorhandene Defekte gestreute Lichtkomponenten,
**dadurch gekennzeichnet, dass**
das Prüfverfahren den Schritt Bestimmen von Unterschieden der von dem Siliziumwafer unter verschiedenen Winkeln zurückgestreuten Lichtkomponenten und eines Klassifizierens eines Oberflächendefekts als Teilchen oder als vom Kristall herrührende Grube basierend auf den Unterschieden umfasst.

16. Verfahren gemäß Anspruch 15, wobei der Schritt des Bestimmens der Unterschiede der gestreuten Lichtkomponenten ein Vergleichen der in eine Richtung senkrecht zu der Oberfläche des Siliziumwafers (W) gestreuten Lichtmenge mit der von der Oberfläche des Siliziumwafers rückgestreuten Lichtmenge umfasst.

17. Verfahren gemäß Anspruch 15, wobei der Schritt des Bestimmens der Unterschiede der gestreuten Lichtkomponenten eine Identifizierung einer Intensitätssenke in der Winkelverteilung des gestreuten Lichts umfasst.

18. Verfahren gemäß Anspruch 15, wobei die gesammelten Lichtkomponenten, welche unter verschiedenen Winkeln von der Oberfläche des Siliziumwafers (W) gestreut werden, durch Photodetektoren (122, 124, 126) detektiert werden, welche Signale erzeugen, und wobei der Schritt des Bestimmens der Unterschiede der von dem Siliziumwafer gestreuten Lichtkomponenten ein Vergleichen der durch die unter verschiedenen Winkeln angeordneten Photodetektoren erzeugten Signale umfasst.

19. Verfahren gemäß Anspruch 18, wobei der Schritt des Sammelns von Komponenten des unter verschiedenen Winkeln gestreuten Lichts ein Sammeln von im Wesentlichen senkrecht von der Oberfläche des Siliziumwafers (W) gestreuten Lichtkomponenten in einem ersten Kollektor (123) und ein Sammeln von unter einem nicht senkrechten Winkel von der Oberfläche des Siliziumwafers gestreuten Lichtkomponenten in einem zweiten Kollektor (121, 125) umfasst.

20. Verfahren gemäß Anspruch 15, wobei der Schritt des Bestimmens der Unterschiede der gestreuten Lichtkomponenten einen Vergleich der Intensitäten der unter verschiedenen Winkeln relativ zu der Oberfläche des Siliziumwafers (W) gesammelten gestreuten Lichtkomponenten umfasst.

21. Verfahren gemäß einem der Ansprüche 15 bis 20, zusätzlich umfassend ein Bilden einer ersten Karte, welche die Orte von vom Kristall herrührenden Grubendefekten auf der Siliziumwaferoberfläche identifiziert.

22. Verfahren gemäß Anspruch 21, welches ein Bilden einer zweiten Karte, welche die Orte von Teilchendefekten auf der Siliziumwaferoberfläche identifiziert, umfasst.

23. Verfahren gemäß Anspruch 22, umfassend die Anzeige der ersten und zweiten Karten auf einer Videoanzeige (23).

24. Verfahren gemäß Anspruch 15, wobei der Schritt des Scannens eines Strahls über die Oberfläche des Siliziumwafers ein Projizieren des Lichtstrahls auf den Siliziumwafer unter einem Einfallswinkel von mindestens 50° von der Senkrechten auf den Siliziumwafer (W) umfasst.

## Revendications

1. Système d'inspection de surface comprenant :
- une station d'inspection destinée à recevoir une tranche de silicium (W) ;
- un scanner (80) placé et arrangé pour scanner une surface de la tranche de silicium à ladite station d'inspection, ledit scanner comprenant une source de lumière (81) arrangée pour projeter un faisceau de lumière P-polarisée à un angle d'incidence autre que normal à la surface de la tranche de silicium et des moyens (85) placés pour balayer le rayon de lumière P-polarisée à travers la surface de la tranche de silicium ;
- une pluralité de collecteurs (121, 123, 125) arrangés pour collecter des composants de lumière diffusés à différents angles de la surface de la tranche de silicium par des défauts présents sur la surface de la tranche de silicium ; et
- un photodétecteur (122, 124, 126) associé à chacun desdits collecteurs destiné à détecter la lumière collectée et à produire un signal ;
**caractérisé en ce que** le système d'inspection comprend des moyens répondant aux signaux produits par lesdits photodétecteurs pour déterminer des différences entre les composants de lumières diffusés par la tranche de silicium (W) à différents angles et collectés par des collecteurs différents et pour classifier un défaut de surface en tant que particule ou en tant que piqûre engendrée par le cristal, ou « crystal originated pit », sur la base desdites différences.

2. Système d'inspection de surface selon la revendication 1, dans lequel ledit moyen destiné à déterminer les différences entre les composants de lumière diffusés comprend des moyens de comparaison de la quantité de lumière diffusée dans une direction perpendiculaire à la surface de la tranche de silicium (W) à la quantité de lumière diffusée vers l'arrière par la surface de la tranche de silicium.

3. Système d'inspection de surface selon la revendication 1, dans lequel ledit moyen destiné à déterminer les différences entre les composants de lumière diffusée comprend des moyens d'identification d'un minimum local d'intensité dans les distributions angulaires de la lumière diffusée.

4. Système d'inspection de surface selon la revendication 1, dans lequel ledit moyen destiné à déterminer les différences entre les composants de lumière diffusée comprend des moyens de comparaison des signaux des photodétecteurs (122, 124, 126) situés à différents angles.

5. Système d'inspection de surface selon la revendication 4, dans lequel ladite pluralité de collecteurs (122, 123, 125) comprend un premier collecteur (123) placé et arrangé pour collecter les composants de lumière diffusés généralement perpendiculairement à la surface de la tranche de silicium (W), et un second collecteur (121, 125) placé et arrangé pour collecter les composants de lumière diffusés à un angle non perpendiculaire à la surface de la tranche de silicium.

6. Système d'inspection de surface selon la revendication 5, dans lequel ledit scanner (80) est placé et arrangé pour diriger le faisceau de lumière sur la surface de la tranche de silicium (W) à un angle d'incidence prédéterminé autre qu'un angle perpendiculaire, et ledit second collecteur (125) est placé et arrangé pour collecter les composants de lumière diffusés vers l'arrière.

7. Système d'inspection de surface selon la revendication 6, dans lequel ladite pluralité de collecteurs (121, 123, 125) comprend en outre un troisième collecteur (121) placé et arrangé pour collecter les composants de lumière diffusés vers l'avant de la surface de la tranche de silicium (W).

8. Système d'inspection de surface selon la revendication 6, dans lequel ledit scanner (80) est placé et arrangé pour diriger le faisceau de lumière sur la surface de la tranche de silicium à un angle d'incidence d'au moins -50° par rapport à la perpendiculaire de la surface de la tranche de silicium.

9. Système d'inspection de surface selon la revendication 5, dans lequel ledit premier collecteur (123) est arrangé pour collecter les composants de lumière diffusés sur une gamme d'angles d'environ ± 20° par rapport à la perpendiculaire de la surface de la tranche de silicium.

10. Système d'inspection selon l'une quelconque des revendications 1 à 9, comprenant en outre des moyens de formation d'une première carte identifiant les positions des défauts de piqûre engendrée par le cristal sur la surface de la tranche de silicium et d'une seconde carte identifiant les positions des défauts de particule sur la surface de la tranche de silicium.

11. Système d'inspection de surface selon la revendication 10, comprenant un dispositif d'affichage vidéo (23) opérationnellement associé auxdits moyens de formation desdites première et seconde cartes destiné à afficher une représentation visuelle desdites première et seconde cartes.

12. Système d'inspection de surface selon la revendication 1, dans lequel ladite source de lumière est arrangée de façon à projeter une lumière P-polarisée à un angle d'incidence d'au moins -50° degrés par rapport à une perpendiculaire de la surface de la tranche de silicium, et dans lequel ladite pluralité de collecteurs (121, 123, 125) comprend un canal collecteur central (123) placé et arrangé pour collecter les composants de lumière diffusés perpendiculairement à la surface de la tranche de silicium (W), et un canal collecteur arrière (125) placé et arrangé pour collecter les composants de lumière rétrodiffusés par la surface de la tranche de silicium ; et dans lequel ledit moyen de détermination des différences entre les composants de lumière diffusés comprend un comparateur répondant aux signaux électriques du photodétecteur (124) dudit canal collecteur central (123) et dudit canal collecteur arrière (125) pour détecter les différences entre les composants de lumière P-polarisée diffusés par la tranche de silicium.

13. Système d'inspection de surface selon la revendication 12, dans lequel ledit comparateur comprend un premier élément comparateur destiné à identifier un défaut comme étant une particule si le rapport de l'intensité du signal du photodétecteur du canal central au signal du photodétecteur du canal arrière est inférieur à une grandeur prédéterminée.

14. Système d'inspection de surface selon la revendication 13, comprenant en outre un canal collecteur avancé (121) placé et arrangé pour collecter les composants de lumière diffusés vers l'avant de la surface de la tranche de silicium, et un photodétecteur (122) est associé au canal collecteur avancé (121) qui peut être mis en fonction pour générer un signal électrique en réponse à la lumière collectée, et dans lequel ledit comparateur comprend un second élément comparateur destiné à identifier un défaut comme étant une piqûre engendrée par le cristal si le rapport de l'intensité du signal du photodétecteur du canal central au signal du photodétecteur du canal avant est supérieur à une grandeur prédéterminée.

15. Procédé d'inspection de surface comprenant les étapes consistant à scanner un faisceau de lumière P-polarisée à travers la surface d'une tranche de silicium (W) à un angle d'incidence autre que normal par rapport à la surface de la tranche de silicium et collectant les composants de lumière diffusés à différents angles de la surface de la tranche de silicium par des défauts présents à la surface de la tranche de silicium ; **caractérisé en ce que** le procédé d'inspection comprend l'étape consistant à déterminer les différences entre les composants de lumière diffusés par la tranche de silicium à différents angles et à classifier un défaut de surface en tant que particule ou en tant que piqure engendrée par le cristal, ou « crystal originated pit », sur la base desdites différences.

16. Procédé selon la revendication 15, dans lequel ladite étape consistant à déterminer les différences entre les composants de lumière diffusés comprend la comparaison de la quantité de lumière diffusée dans une direction perpendiculaire à la surface de la tranche de silicium (W) à la quantité de lumière diffusée vers l'arrière par la surface de la tranche de silicium.

17. Procédé selon la revendication 15, dans lequel ladite étape consistant à déterminer les différences entre les composants de lumière diffusés comprend l'identification d'une baisse d'intensité dans la distribution angulaire de la lumière diffusée.

18. Procédé selon la revendication 15, dans lequel les composants collectés de lumière diffusés à différents angles de la surface de la tranche de silicium (W) sont détectés par des photodétecteurs (122, 124, 126) qui produisent des signaux et dans lequel ladite étape consistant à déterminer les différences entre les composants de lumière diffusés par la tranche de silicium comprend la comparaison de signaux produits par les photodétecteurs situés à des angles différents.

19. Procédé selon la revendication 18, dans lequel l'étape consistant à collecter les composants de lumière diffusés à différents angles comprend la collection de composants de lumière diffusés généralement perpendiculairement à la surface de la tranche de silicium (W) dans un premier collecteur (123), et la collection des composants de lumière diffusés à un angle non perpendiculaire de la surface de la tranche de silicium dans un second collecteur (121, 125).

20. Procédé selon la revendication 15, dans lequel l'étape consistant à déterminer les différences entre les composants de lumière diffusés comprend la comparaison des intensités des composants de lumière diffusés collectés à divers angles par rapport à la surface de la tranche de silicium (W).

21. Procédé selon l'une quelconque des revendications 15 à 20, comprenant en outre la formation d'une première carte identifiant les positions des défauts de piqûre sur la surface de la tranche de silicium.

22. Procédé selon la revendication 21, comprenant la formation d'une seconde carte identifiant les positions des défauts de particule sur la surface de la tranche de silicium.

23. Procédé selon la revendication 22, comprenant l'affichage desdites première et seconde cartes sur un dispositif d'affichage vidéo (23).

24. Procédé selon la revendication 15, dans lequel l'étape consistant à scanner un faisceau à travers la surface de la tranche de silicium comprend la projection du faisceau de lumière sur la tranche de silicium à un angle d'incidence d'au moins 50 degrés par rapport à la perpendiculaire de la tranche de silicium (W).
